# EUROPEAN PATENT APPLICATION

(11) **EP 3 043 533 A1**
(43) Date of publication of application: **13.07.2016**
(21) Application number: 14841014.5
(22) Date of filing: 24.06.2014
(51) Int. Cl.: H04L 29/12

(54) **DOMAIN NAME RESOLUTION METHOD, DOMAIN NAME CACHE SERVER, AND FINAL DOMAIN NAME SERVER**

(30) Priority: 02.09.2013 CN 201310392877
(71) Applicant: ZTE Corporation, Shenzhen, Guangdong 518057 (CN)
(72) Inventor: HUANG, Sunliang, Shenzhen Guangdong 518057 (CN); CHEN, Jianye, Shenzhen Guangdong 518057 (CN); WU, Ping, Shenzhen Guangdong 518057 (CN)
(74) Representative: Mozzi, Matteo
(86) International application number: PCT/CN2014/080659
(87) International publication number: WO 2015/027743

(57) **Abstract**

Provided are a domain name resolution method, a DNS cache server and a final DNS server. In the method, a DNS cache server establishes a connection with a final DNS server according to address information of the final DNS server, and acquires information of all domain name records about a predetermined domain name from the final DNS server, to determine a domain name resolution result of the predetermined domain name according to the information of all the domain name records about the predetermined domain name, wherein the information of all the domain name records about the predetermined domain name is a correlation between the predetermined domain name and different IP addresses. A DNS cache server can determine a domain name resolution result according to a current link condition, thereby solving the problem in the related art that, when a user initiates a domain name resolution request, domain name resolution cannot be conducted according to a real network situation due to the fact that a DNS cache server caches an old domain name record.

## Description

### Technical Field

The present disclosure relates to the field of communications, and in particular to a domain name resolution method, a Domain Name System (DNS) cache server and a final DNS server.

### Background

Domain name resolution technologies are fundamental technologies of Internet, which provide a mutual mapping relationship between domain name information and Internet Protocol (IP) address information, enabling users not to memorize complex IP address information but to memorize simple domain name information when using the Internet, and greatly promoting the development of Internet.

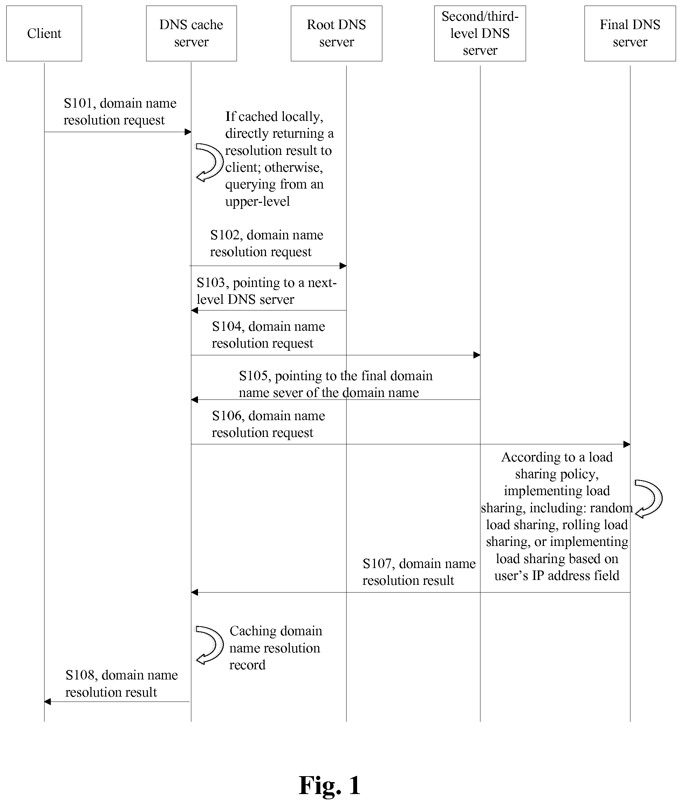

The processing procedure of domain name resolution and load sharing (also called load balancing) in related art is as shown in Fig. 1. A Domain Name System (DNS) includes a DNS cache server, a root DNS server, second/third-level DNS servers and a final DNS server. The DNS cache server is generally a DNS server configured and/or specified by a user client or acquired from an Internet Service Provider (ISP) by a user client to cache common domain name records and to serve as an agent for the domain name query from users. The root DNS server is, for example, a DNS root server in the existing network, it is responsible for storing relative information of the root area and providing services for all nodes in the root area. The second/third-level DNS servers are DNS servers of various areas, for example, cn DNS server and edu.cn DNS server. The final DNS server here refers to a DNS server that finally maintains specific domain names and IP addresses, for example, the DNS server of sina.com. The domain name resolution service process includes S101 to S108 as below.

S101: a user client initiates a domain name resolution request. Since the user client is generally configured with a specified DNS server or can acquire DNS server information while dynamically acquiring IP addresses, the user client could initiate a domain name resolution request to a DNS cache server.

S102: after the DNS cache server receives the domain name resolution request from the user, the DNS cache server searches in the local cache; if there is a corresponding DNS record in the local cache, the DNS cache server returns a domain name resolution result to the client; if there is no corresponding DNS record, the DNS cache server requests domain name resolution from an upper-level DNS server, which is a root DNS server in the present flow. Therefore, in a condition that there is no corresponding domain name record in the local cache, the DNS cache server initiates a domain name resolution request to the root DNS server on behalf of the user.

S103: after the root DNS server receives the domain name resolution request, the root DNS server returns information about a corresponding second-level DNS server to the DNS cache server, indicating the DNS cache server to initiate a domain name resolution request to the second-level DNS server.

S104: after the DNS cache server acquires the information about the second-level DNS server, the DNS cache server initiates a domain name resolution request to the second-level DNS server.

S105: after the second-level DNS server receives the domain name resolution request, the second-level DNS server returns information about a next-level (third-level) DNS server to the DNS cache server, recursive operation is performed until information about the final DNS server can be provided to the user.

S106: after the DNS cache server acquires information about the final DNS server, the DNS cache server initiates a domain name resolution request to the final DNS server.

S107: after the final DNS server receives the domain name resolution request, the final DNS server provides a corresponding domain name resolution result according to the maintained domain name record information in conjunction with a load sharing policy and returns the domain name resolution result to the DNS cache server. Specific load sharing polices might adopt a random allocation mode, a rolling mode or a load sharing mode based on user's IP address field.

S108: after acquiring the domain name resolution result, the local DNS server caches the domain name resolution record information so as to directly provide a domain name resolution service to users subsequently; then, the local DNS server returns the obtained domain name resolution result to the client.

The domain name resolution and load sharing processing method described above has a defect that there is no interaction mechanism between the DNS cache server and the final DNS server; if the load sharing policy of the final DNS server is adjusted, the adjusted load sharing policy cannot be updated to the DNS cache server in real time.

Since the DNS cache server still caches old domain name records, when a user initiates a domain name resolution request, the DNS server will find old domain name record information in the local cache and will thus provide the old domain name record to the user. In addition, when network congestion occurs, the DNS cache server still provides a domain name resolution result to a user using the old domain name record, but cannot flexibly implement load sharing of domain name resolution according to network resources and status, as a result, the user cannot be provided with optimal services and may not be able to access the services normally.

### Summary

The embodiments of the present disclosure provide a domain name resolution method, a DNS cache server and a final DNS server, to solve the problem in the related art that, when a user initiates a domain name resolution request, domain name resolution cannot be conducted according to a real network situation due to the fact that the DNS cache server caches an old domain name record, thereby realizing load balancing.

To solve the above technical problem, according to one aspect, an embodiment of the present disclosure provides a load balancing method, including: a DNS cache server establishes a connection with a final DNS server according to address information of the final DNS server, and acquires information of all domain name records about a predetermined domain name from the final DNS server, to determine a domain name resolution result of the predetermined domain name according to the information of all the domain name records about the predetermined domain name, wherein the information of all the domain name records about the predetermined domain name is a correlation between the predetermined domain name and different IP addresses

In an example embodiment, before a DNS cache server establishes the connection with the final DNS server according to the address information of the final DNS server, the method further includes: in a condition that the DNS cache server receives a domain name resolution result returned from the final DNS server, the address information of the final DNS server is acquired; or, in a condition that the DNS cache server is preconfigured with the address information of the final DNS server, the preconfigured address information of the final DNS server is acquired.

In an example embodiment, determining the domain name resolution result of the predetermined domain name according to the information of all the domain name records about the predetermined domain name may include: a domain name resolution request for the predetermined domain name is received from a client; it is judged whether load balancing of domain name resolution is required for the predetermined domain name; in a condition that the load balancing of the domain name resolution is required for the predetermined domain name, the domain name resolution result of the predetermined domain name is determined according to the acquired information of all the domain name records about the predetermined domain name.

In an example embodiment, in a condition that the load balancing of the domain name resolution is required for the predetermined domain name, determining the domain name resolution result of the predetermined domain name according to the acquired information of all the domain name records about the predetermined domain name may include: a network status of a network service cluster corresponding to each IP address in the information of all the domain name records about the predetermined domain name is detected; one network service cluster with network status meeting a predetermined policy is determined to obtain one domain name resolution result.

In an example embodiment, after the DNS cache server acquires from the final DNS server the information of all the domain name records about the predetermined domain name, the method may further include: the DNS cache server saves the information of all the domain name records about the predetermined domain name.

According to another aspect, an embodiment of the present disclosure provides a DNS cache server, including: a first connection establishment component, which is configured to establish a connection with a final DNS server according to address information of the final DNS server; a first acquisition component, which is configured to acquire, from the final DNS server, information of all domain name records about a predetermined domain name, to determine a domain name resolution result of the predetermined domain name according to the information of all the domain name records about the predetermined domain name, wherein the information of all the domain name records about the predetermined domain name is a correlation between the predetermined domain name and different IP addresses.

In an example embodiment, the DNS cache server may further include: a second acquisition component, which is configure to acquire the address information of the final DNS server in a condition that the DNS cache server receives a domain name resolution result returned from the final DNS server; a third acquisition component, which is configured to acquire, in a condition that the DNS cache server is preconfigured with the address information of the final DNS server, the preconfigured address information of the final DNS server.

In an example embodiment, the DNS cache server may further include: a domain name resolution component, which includes: a receiving element, which is configured to receive from a client a domain name resolution request for the predetermined domain name; a judgment element, which is configured to judge whether load balancing of domain name resolution is required for the predetermined domain name; a determination element, which is configured to determine, in a condition that the load balancing of the domain name resolution is required for the predetermined domain name, a domain name resolution result of the predetermined domain name according to the acquired information of all the domain name records about the predetermined domain name.

In an example embodiment, the DNS cache server may further include: a saving component, which is configured to save the information of all the domain name records about the predetermined domain name.

According to a third aspect, an embodiment of the present disclosure provides a final DNS server, including: a second connection establishment component, which is configured to establish a connection with a DNS cache server in a condition of receiving a connection request from the DNS cache server; a sending component, which is configured to send information of all domain name records about a predetermined domain name to the DNS cache server, to enable the DNS cache server to perform domain name resolution for the predetermined domain name according to the information of all the domain name records about the predetermined domain name, wherein the information of all the domain name records about the predetermined domain name is a correlation between the predetermined domain name and different IP addresses.

In the embodiments of the present disclosure, a DNS cache server establishes a connection with a final DNS server according to address information of the final DNS server, and acquires information of all domain name records about a predetermined domain name from the final DNS server to resolve the domain name, so that the DNS cache server is able to determine a domain name resolution result according to the current link status, thereby solving the problem in the related art that, when a user initiates a domain name resolution request, domain name resolution cannot be conducted according to a real network situation due to the fact that a DNS cache server caches an old domain name record.

### Brief Description of the Drawings

Fig. 1 is a process flowchart of resolution in related art;
Fig. 2 is a flowchart of a domain name resolution method according to an embodiment of the present disclosure;
Fig. 3 is a first structure diagram of a DNS cache server according to an embodiment of the present disclosure;
Fig. 4 is a second structure diagram of a DNS cache server according to an embodiment of the present disclosure;
Fig. 5 is a third structure diagram of a DNS cache server according to an embodiment of the present disclosure;
Fig. 6 is a structure diagram of a final DNS server according to an embodiment of the present disclosure;
Fig. 7 is a process flowchart of acquiring information of all domain name records by a static configuration method according to an example embodiment of the present disclosure;
Fig. 8 is a process flowchart of acquiring information of all domain name records by a protocol extension method according to an example embodiment of the present disclosure; and
Fig. 9 is a process diagram of domain name resolution and load sharing conducted by a DNS cache server based on network status according to an example embodiment of the present disclosure.

### Detailed Description of the Embodiments

To resolve the problem in the related art that, when a user initiates a domain name resolution request, domain name resolution cannot be conducted according to a real network situation due to the fact that a DNS cache server caches an old domain name record, the embodiments of the present disclosure provide a domain name resolution method, a DNS cache server and a final DNS server. The present disclosure is illustrated below in further detail in conjunction with accompanying drawings and embodiments. It should be noted that specific embodiments described hereinafter are only intended to explain the present disclosure but to limit the present disclosure.

In the related art, the existence of DNS cache servers enables the obtainment of resolution results of most DNS resolutions at the DNS cache server. Therefore, a DNS cache server, but a final domain name resolution server, is more proper to implement DNS load balancing according to real-time network status. During the process that the DNS cache server implements DNS load balancing, first the DNS cache server should have information of all domain name records about a specified domain name; therefore, a method is provided for the DNS cache server to acquire the information of all the domain name records about the specified domain name from the final domain name resolution server and to perform domain name resolution according to the acquired information of all the domain name records.

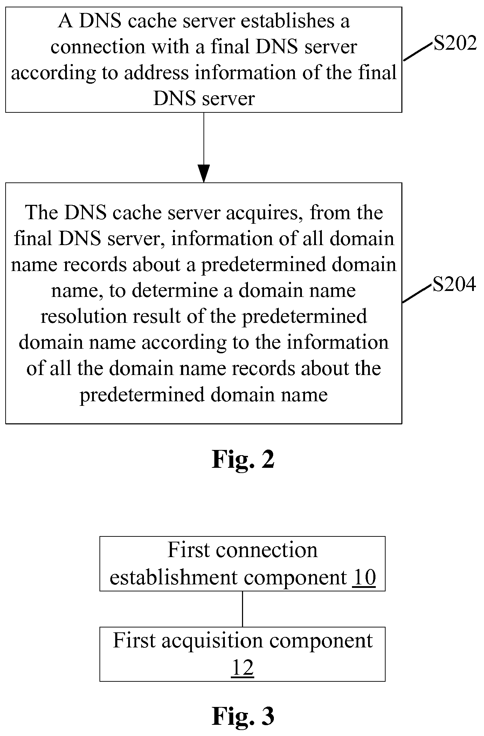

An embodiment provides a domain name resolution method, which as shown in Fig. 2 includes S202 to S204 which are described in detail below.

S202: a DNS cache server establishes a connection with a final DNS server according to address information of the final DNS server.

After the DNS cache server obtains the address information of the final DNS server, the DNS cache server establishes, according to the address information, a connection with the final DNS server corresponding to the address information. Generally, there may be only one final DNS server, which corresponds to one specified domain name, for example, the final DNS server of sina.com is only 1 in quantity, which maintains the information of multiple domain name records. For example, there are 31 provinces in China, each having one web service cluster; the address of the service cluster corresponding to Guangdong is 1.1.1.1, the address of the service cluster corresponding to Guangxi is 2.2.2.2, each address forms a piece of domain name record information to be stored in the final DNS server.

S204: the DNS cache server acquires information of all domain name records about a predetermined domain name from the final DNS server, to determine a domain name resolution result of the predetermined domain name according to the information of all the domain name records about the predetermined domain name, wherein the information of all the domain name records about the predetermined domain name is a correlation between the predetermined domain name and different IP addresses.

One piece of domain name record information records one IP address corresponding to the predetermined domain name, and the final DNS server stores the information of all the domain name records corresponding to a certain domain name. After the DNS cache server obtains the information of all the domain name records, the DNS cache server can perform domain name resolution according to a current status of a server to be connected.

In this embodiment , a DNS cache server establishes a connection with a final DNS server according to address information of the final DNS server, and acquires the information of all the domain name records about the predetermined domain name from the final DNS server to resolve the domain name, so that the DNS cache server can determine a domain name resolution result according to the current link status, thereby solving the problem in the related art that, when a user initiates a domain name resolution request, domain name resolution cannot be conducted according to a real network situation due to the fact that a DNS cache server caches an old domain name record.

During implementation, there are multiple ways for the DNS cache server to acquire the address information of the final DNS server. If currently the process is conducted according to the flow of related art, that is, when the DNS cache server receives a domain name resolution result returned from the final DNS server, the DNS cache server may directly acquire the address information of the final DNS server. Of course, the address information of the final DNS server may alternatively be preconfigured in the DNS cache server during system initialization, then in such a situation, the DNS cache server may establish a connection with the final DNS server according to the preconfigured address information. Those skilled in the art should also know how to establish a connection with the final DNS server through a third-party device according to the above description, and no further description is needed here.

After the DNS cache server acquires from the final DNS server the information of all the domain name records about the predetermined domain name, determining the domain name resolution result of the predetermined domain name according to the information of all the domain name records about the predetermined domain name includes: the DNS cache server receives from a client a domain name resolution request for the predetermined domain name, judges whether load balancing of domain name resolution is required for the predetermined domain name, and, in a condition that the load balancing of the domain name resolution is required for the predetermined domain name, determines the domain name resolution result of the predetermined domain name according to the acquired information of all the domain name records about the predetermined domain name, that is, selects one piece of domain name record information from all the domain name record information and determines the corresponding IP address according to the selected domain name record information. In a condition that the load balancing of the domain name resolution is not required for the predetermined domain name, the DNS cache server directly returns the resolution result of the predetermined domain name to the client. In a condition that the load balancing of the domain name resolution is required for the predetermined domain name, the DNS cache server may also detect a network status corresponding to each network service cluster in all the domain name record information and then determine one network service cluster meeting a predetermined policy, thereby determining a domain name resolution result. The predetermined policy might be selecting a network service cluster with a best network status from all the domain name record information, or might be selecting a network service cluster nearest to the client. Those skilled in the art can set the predetermined policy as needed.

After the DNS cache server acquires from the final DNS server the information of all the domain name records about the predetermined domain name, the DNS cache server saves the information of all the domain name records about the predetermined domain name, so that the DNS cache server can use the information for subsequent load balancing.

Another embodiment provides a DNS cache server, which as shown in Fig. 3 includes: a first connection establishment component 10, which is configured to establish a connection with a final DNS server according to address information of the final DNS server; a first acquisition component 12, which is coupled with the first connection establishment component 10 and is configured to acquire, from the final DNS server, information of all domain name records about a predetermined domain name, to determine a domain name resolution result of the predetermined domain name according to the information of all the domain name records about the predetermined domain name, wherein the information of all the domain name records about the predetermined domain name is a correlation between the predetermined domain name and different IP addresses.

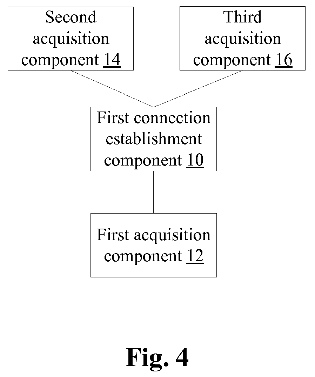

Fig. 4 is an example structure diagram of the DNS cache server described above, which on the basis of Fig. 3 further includes: a second acquisition component 14, which is coupled with the first connection establishment component 10 and is configure to acquire the address information of the final DNS server in a condition that the DNS cache server receives a domain name resolution result returned from the final DNS server; a third acquisition component 16, which is coupled with the first connection establishment component 10 and is configured to acquire, in a condition that the DNS cache server is preconfigured with the address information of the final DNS server, the preconfigured address information of the final DNS server. If the DNS cache server is not configured with the address information of the final DNS server in advance, the third acquisition component 16 is not triggered; the address information is acquired by the second acquisition component 14; or, if the DNS cache server has previously acquired a domain name resolution result returned from the final DNS server, the second acquisition component 14 is triggered to acquire the address information. Both the second acquisition component 14 and the third acquisition component 16 may exist simultaneously and trigger different acquisition processes according to different conditions.

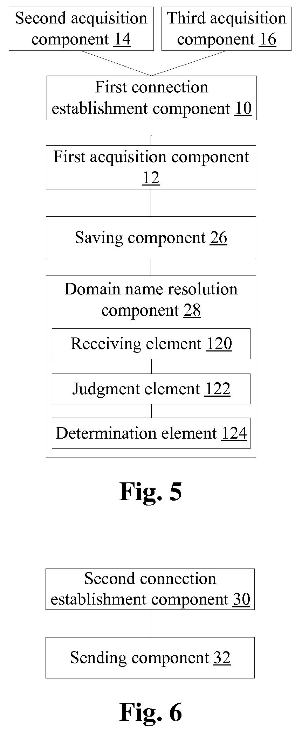

Fig. 5 is an example structure diagram of the DNS cache server described above, which on the basis of Fig. 4 further includes: a saving component 26, which is coupled with the first acquisition component 12 and is configured to save the information of all the domain name records about the predetermined domain name; a domain name resolution component 28, which is configured to determine a domain name resolution result of the predetermined domain name according to the information of all the domain name records about the predetermined domain name. Specifically, the domain name resolution component 28 includes: a receiving element 120, which is configured to receive from a client a domain name resolution request for the predetermined domain name; a judgment element 122, which is coupled with the receiving element 120 and is configured to judge whether load balancing of domain name resolution is required for the predetermined domain name; a determination element 124, which is coupled with the judgement element 122 and is configured to determine, in a condition that the load balancing of the domain name resolution is required for the predetermined domain name, a domain name resolution result of the predetermined domain name according to the acquired information of all the domain name records about the predetermined domain name. The determination element 124 may also be configured to detect a network status of a network service cluster corresponding to each IP address in the information of all the domain name records about the predetermined domain name, and to determine one network service cluster with network status meeting a predetermined policy to obtain one domain name resolution result.

An embodiment of the present disclosure also provides a final DNS server, which as shown in Fig. 6 includes: a second connection establishment component 30, which is configured to establish a connection with a DNS cache server in a condition of receiving a connection request from the DNS cache server; a sending component 32, which is coupled with the second connection establishment component 30 and is configured to send information of all domain name records about a predetermined domain name to the DNS cache server, to enable the DNS cache server to perform domain name resolution for the predetermined domain name according to the information of all the domain name records about the predetermined domain name, wherein the information of all the domain name records about the predetermined domain name is a correlation between the predetermined domain name and different IP addresses.

### Example Embodiments

With the development of technologies, a technology appears to provide network resource and status information for application systems, for example, Application-Layer Traffic Optimization (ALTO). This type of technology enables application systems to query and acquire needed network status information according to their needs, so as to make more optimal resource scheduling and service provision. The domain name resolution and load sharing of DNS system can also adopt this type of technology, to realize network resource and status based domain name resolution and load sharing. However, in the present DNS service processing mode, since the DNS cache server caches domain name records, lots of DNS resolutions are completed by the DNS cache server. Therefore, the DNS cache server needs to have a capability of implementing domain name resolution and load sharing based on network status, and this requires the DNS cache server to have all the record information of a specified domain name. In related art, the DNS cache server cannot acquire all the record information of the specified domain name based on part information detected in real time during the service processing process. Therefore, an information interaction method is needed between the DNS cache server and the final DNS server, so that the DNS cache server can acquire all the record information of a specified domain name as needed.

Based on the above idea, this embodiment provides a domain name resolution method, which can be applied to load balancing, realizes information interaction between the DNS cache server and the final DNS server, and enables the DNS cache server to acquire needed domain name record information as needed. With this method, the DNS cache server can acquire the information of all the domain name records of a specified domain name, thereby solving the problem that not all the domain name record information of the specified domain name can be acquired if the DNS cache server only intercepts and caches the domain name resolution information returned from the final DNS server during the domain name resolution process, and providing a basis for the DNS cache server to perform domain name resolution and load sharing.

The above method mainly designs a special interface and a process between the DNS cache server and the final DNS server, so as to enable the acquirement of all the record information of a specified domain name. The specific service processing method and process might be divided into two modes according to specific conditions and scenarios, with respective descriptions below.

The first mode is a static configuration method. The final DNS server maintains the domain name record information, while the DNS cache server obtains record information on demand according to the needs of service deployment. In many cases, the final DNS server and the DNS cache server belong to different companies or teams, they do not know each other's IP address and it is difficult to establish a connection. Therefore, in this mode, the IP address of the final DNS server is preconfigured by a static configuration method, to facilitate the establishment of connection. The specific service process flow is as described in (1) to (4) below:
(1) the IP address information of the final DNS server is configured on the DNS cache server by a preconfiguration method, or, a third-party maintains a specified domain name and the IP address information of the final DNS server of the specified domain name; (2) the DNS cache server establishes a connection with the final DNS server according to the preconfigured IP address information of the final DNS server; (3) the DNS cache server requests from the final DNS server all the record information of the domain name; (4) the final DNS server performs corresponding processing according to the request from the DNS cache server, and provides all the record information of the domain name to the DNS cache server. Specifically, a third-party maintains the specified domain name and the IP address information of the final DNS server of the specified domain name, that is to say, an external system maintains the corresponding relationship between the specified domain name and the IP address of the final DNS server of the specified domain name, and the DNS cache server may query and acquire the IP address of the final DNS server from the external system. In such a case, it is only needed to configure the IP address of the third-party server on the DNS cache server; therefore, this method also belongs to the preconfiguration mode.

The above process is described below in conjunction with accompanying drawings.

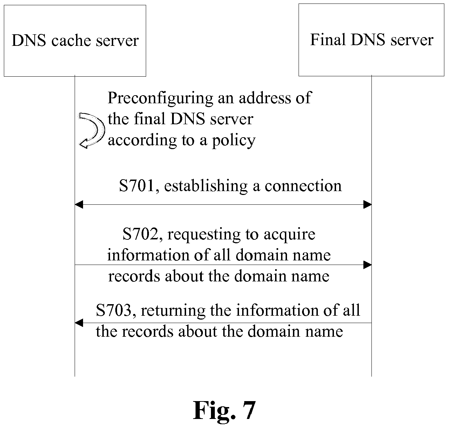

Fig. 7 is a process flowchart of acquiring the information of all the domain name records by a static configuration method according to this embodiment. This process mainly involves a DNS cache server and a final DNS server. The specific service process includes following steps (S701 to S703).

S701: service requirements of domain name cache services are determined, for example, which domain names need to be directly resolved on the DNS cache server to implement load sharing of domain name resolution, or, a specified domain name needs to be resolved on the DNS cache server according to real-time network status information to implement real-time load sharing. In such a case, the DNS cache server is required to have the information of all the domain name records about the domain name. Therefore, the DNS cache server may need to make a corresponding policy according to service needs, and may need to be preconfigured with the IP address of the final DNS server of the specified domain name, so that the DNS cache server can establish a connection with the final DNS server; afterwards, the DNS cache server establishes a connection with the final DNS server according to the IP address information of the final DNS server.

S702: after the DNS cache server establishes a connection with the final DNS server, the DNS cache server requests the information of all the domain name records of the specified domain name from the final DNS server.

S703: after the final DNS server receives the request from the DNS cache server, the final DNS server processes the request and returns the information of all the domain name records of the specified domain name to the DNS cache server.

The above method has following features: in the method for implementing information interaction between a DNS cache server and a final DNS server through static configuration, an address of the final DNS server is configured on the DNS cache server; the DNS cache server has a capability of requesting to acquire the information of all the domain name records of a specified domain name as well as a capability of receiving and processing the information of all the domain name records of the specified domain name; the final DNS server has a capability of processing all the record information of the specified domain name and returning all the record information of the specified domain name to the DNS cache server.

The second mode is a protocol extension method. This method extends the service process of DNS involved in related art and requests from the final DNS server the information of all the domain name records of a specified domain name. The specific service process includes following processes (1) to (8).
(1) According to the requirement of services, a DNS cache server needs to acquire the information of all the domain name records of a certain domain name.
(2) The DNS cache server initiates a domain name resolution request for a certain domain name to a root DNS server.
(3) After the root DNS server receives the domain name resolution request, the root DNS server returns information about a next-level DNS server to the DNS cache server, indicating the DNS cache server to send a domain name resolution request to the next-level DNS server.
(4) The DNS cache server initiates a domain name resolution request to the second-level DNS server; after the second-level DNS server receives the domain name resolution request, the second-level DNS server returns information about a third-level DNS server to the DNS cache server, recursive processing is conducted until the provided DNS server information is the information about the final DNS server.
(5) The DNS cache server initiates a domain name resolution request to the final DNS server.
(6) After the final DNS server receives the domain name resolution request, the final DNS server generates a domain name resolution result according to a domain resolution and load balancing policy and returns the domain name resolution result to the DNS cache server.
(7) The DNS cache server successfully obtains the domain name resolution result and hereby determines the final DNS server; then, the DNS cache server initiates a request to the final DNS server to acquire the information of all the domain name records of the specified domain name.
(8) After the final DNS server receives the request from the DNS cache server to acquire the information of all the domain name records of the specified domain, the final DNS server returns all the record information of the specified domain name to the DNS cache server; so far, the DNS cache server obtains the information of all the domain name records of the specified domain name.

In the above process, (2) to (6) are the operations in related art; and this embodiment carries out further operations on the basis of the process in related art. A description is provided below for the above process in conjunction with accompanying drawings.

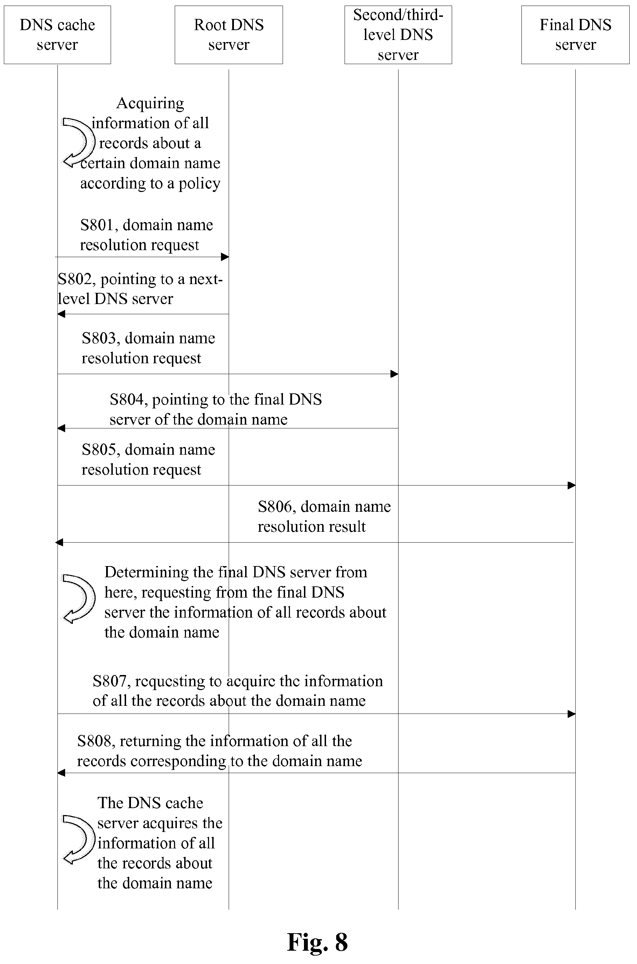

Fig. 8 is a process flowchart of acquiring the information of all the domain name records by a protocol extension method according to this embodiment. This process mainly involves a DNS cache server, a root DNS server, a second/third-level DNS server and a final DNS server. The specific process includes following steps (S801 to S808).

S801: the DNS cache server configures corresponding policies according to requirements, and specifies which domain names need all the domain name information; then, the DNS cache server initiates a domain name resolution request for the specified domain name; the purpose of initiating a domain name resolution request is to obtain information about the final domain name resolution server by means of the process of DNS resolution. In this embodiment, it is set to first initiate a domain name resolution request to the root DNS server.

S802: after the root DNS server receives the domain name resolution request, the root DNS server returns information about a second-level DNS server to the DNS cache server.

S803: after the DNS cache server obtains the information about the second-level DNS server, the DNS cache server initiates a domain name resolution request to the second-level DNS server.

S804: after the second-level DNS server receives the domain name resolution request, the second-level DNS server returns information about a third-level DNS server to the DNS cache server, recursive processing is conducted until the information provided to the DNS cache server is the information about the final DNS server.

S805: the DNS cache server sends a domain name resolution request to the final DNS server.

S806: after the final DNS server receives the domain name resolution request, the final DNS server performs domain name resolution and returns the domain name resolution result to the DNS cache server.

S807: after the DNS cache server successfully obtains the domain name resolution result, the DNS cache server can hereby determine information about the final DNS server of the specified domain name. In order to obtain the information of all the domain name records of the specified domain name, the DNS cache server continues to initiate a request to the final DNS server to acquire the information of all the domain name records of the specified domain name.

S808: after the final DNS server receives the request message to acquire all the domain name records of the specified domain, the final DNS server processes the request and returns all the record information of the specified domain name to the DNS cache server; so far, the DNS cache server obtains the information of all the domain name records of the specified domain name.

The above method has following features: in the method for implementing information interaction between a DNS cache server and a DNS server through DNS protocol extension, the DNS cache server can configure corresponding policies and specify for which domain names it needs to acquire the information of all the domain name records; after the DNS cache server obtains the successful resolution result of a domain name specified by the policy, the DNS cache server can hereby determine the final DNS server; after the DNS cache server obtains information about the final DNS server through the domain name resolution result, the DNS cache server can initiate a request to the final DNS server to acquire all the record information of the specified domain name; the DNS cache server has a capability of receiving and processing the information of all the domain name records of the specified domain name; the final DNS server has a capability of processing all the record information of the specified domain name and returning all the record information of the specified domain name to the DNS cache server.

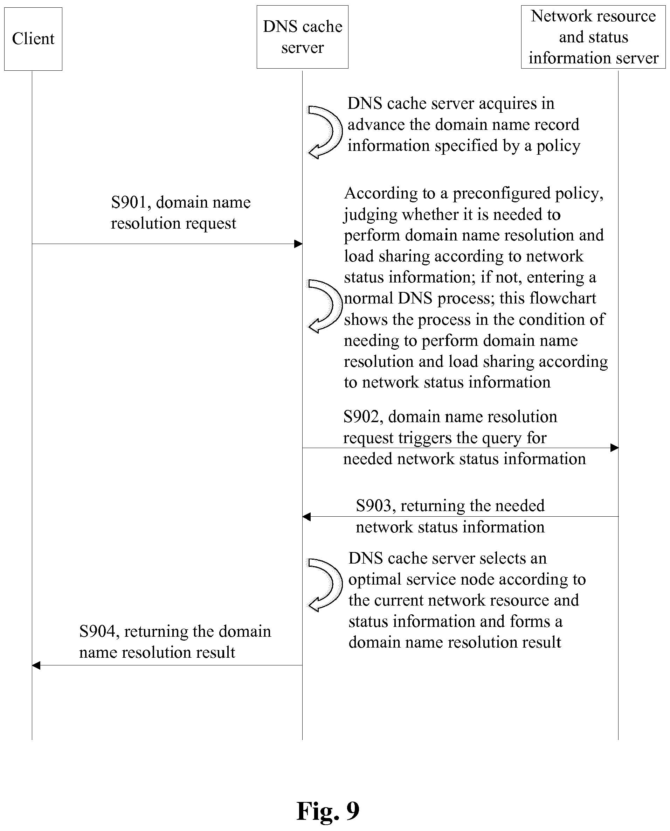

Fig. 9 is a process diagram of domain name resolution and load sharing conducted by a DNS cache server based on network status according to the this embodiment. This process mainly describes a procedure in which the DNS cache server implements domain name resolution and load sharing for a specified domain name based on network status information and provides a real-time optimal domain name resolution service for a user. This process mainly involves a client, a DNS cache server, and a network resource and status information server, and the specific process includes following steps (S901 to S904).

S901: the user client initiates a domain name resolution request. Before the client initiates a request, the DNS cache server acquires, according to a configured policy, the information of all the domain name records of a domain specified by the policy in advance. The acquisition method may adopt any method described above.

S902: after the DNS cache server receives the domain name resolution request, the DNS cache server first judges whether domain name resolution and load sharing according to network status information is needed for this domain name. If domain name resolution and load sharing according to network status information is not needed for this domain name, the DNS cache server enters the normal domain name resolution process; otherwise, the DNS cache server performs domain name resolution and load sharing according to network status information. In this embodiment, since it is needed to perform domain name resolution and load sharing according to network status information, the domain name resolution request will trigger the DNS cache server to query needed network status information from the network resource and status information server.

S903: after the network resource and status information server receives the query request, the network resource and status information server performs corresponding process, and returns needed network status information to the DNS cache server according to the requirement of the DNS cache server.

S904: the DNS cache server selects a currently optimal service node from the information of all the domain name records of the specified domain name according to the current network resource and status information and user's attributes, forms a domain name resolution result and returns the domain name resolution result to the client.

The method provided by this method enables a DNS cache server to acquire the information of all the domain name records of a specified domain name according to needs, thereby implementing load sharing of domain name resolution at the DNS cache server, and further implementing domain name resolution and load sharing based on network resource and state information. Thus, the method can provide a better domain name resolution service for users.

For the purpose of examples, although example embodiments of the present disclosure haven been disclosed, those skilled in the art shall realize that various improvements, increments and substitutes are possible; therefore, the scope of the present disclosure is not limited to the above embodiments.

## Claims

1. A domain name resolution method, comprising:
establishing, by a Domain Name System, DNS, cache server, a connection with a final DNS server according to address information of the final DNS server; and
acquiring, from the final DNS server by the DNS cache server, information of all domain name records about a predetermined domain name, to determine a domain name resolution result of the predetermined domain name according to the information of all the domain name records about the predetermined domain name, wherein the information of all the domain name records about the predetermined domain name is a correlation between the predetermined domain name and different Internet Protocol, IP, addresses.

2. The method as claimed in claim 1, wherein before the DNS cache server establishes the connection with the final DNS server according to the address information of the final DNS server, the method further comprises:
in a condition that the DNS cache server receives a domain name resolution result returned from the final DNS server, acquiring the address information of the final DNS server; or,
in a condition that the DNS cache server is preconfigured with the address information of the final DNS server, acquiring the preconfigured address information of the final DNS server.

3. The method as claimed in claim 1 or 2, wherein determining the domain name resolution result of the predetermined domain name according to the information of all the domain name records about the predetermined domain name comprises:
receiving from a client a domain name resolution request for the predetermined domain name;
judging whether load balancing of domain name resolution is required for the predetermined domain name;
in a condition that the load balancing of the domain name resolution is required for the predetermined domain name, determining the domain name resolution result of the predetermined domain name according to the acquired information of all the domain name records about the predetermined domain name.

4. The method as claimed in claim 3, wherein, in the condition that the load balancing of the domain name resolution is required for the predetermined domain name, determining the domain name resolution result of the predetermined domain name according to the acquired information of all the domain name records about the predetermined domain name comprises:
detecting a network status of a network service cluster corresponding to each IP address in the information of all the domain name records about the predetermined domain name;
determining one network service cluster with network status meeting a predetermined policy to obtain one domain name resolution result.

5. The method as claimed in claim 1 or 2, wherein after the DNS cache server acquires from the final DNS server the information of all the domain name records about the predetermined domain name, the method further comprises:
saving, by the DNS cache server, the information of all the domain name records about the predetermined domain name.

6. A Domain Name System, DNS, cache server, comprising:
a first connection establishment component, which is configured to establish a connection with a final DNS server according to address information of the final DNS server;
a first acquisition component, which is configured to acquire, from the final DNS server, information of all domain name records about a predetermined domain name, to determine a domain name resolution result of the predetermined domain name according to the information of all the domain name records about the predetermined domain name, wherein the information of all the domain name records about the predetermined domain name is a correlation between the predetermined domain name and different Internet Protocol, IP, addresses.

7. The server as claimed in claim 6, further comprising:
a second acquisition component, which is configure to acquire the address information of the final DNS server in a condition that the DNS cache server receives a domain name resolution result returned from the final DNS server;
a third acquisition component, which is configured to acquire, in a condition that the DNS cache server is preconfigured with the address information of the final DNS server, the preconfigured address information of the final DNS server.

8. The server as claimed in claim 6 or 7, further comprising: a domain name resolution component which comprises:
a receiving element, which is configured to receive from a client a domain name resolution request for the predetermined domain name;
a judgment element, which is configured to judge whether load balancing of domain name resolution is required for the predetermined domain name;
a determination element, which is configured to determine, in a condition that the load balancing of the domain name resolution is required for the predetermined domain name, the domain name resolution result of the predetermined domain name according to the acquired information of all the domain name records about the predetermined domain name.

9. The server as claimed in claim 6 or 7, further comprising:
a saving component, which is configured to save the information of all the domain name records about the predetermined domain name.

10. A final Domain Name System, DNS, server, comprising:
a second connection establishment component, which is configured to establish a connection with a DNS cache server in a condition of receiving a connection request from the DNS cache server;
a sending component, which is configured to send information of all domain name records about a predetermined domain name to the DNS cache server, to enable the DNS cache server to perform domain name resolution for the predetermined domain name according to the information of all the domain name records about the predetermined domain name, wherein the information of all the domain name records about the predetermined domain name is a correlation between the predetermined domain name and different Internet Protocol, IP, addresses.
